(19) Europäisches Patentamt
European Patent Office
Office européen des brevets

(11) **EP 4 317 502 B1**

(12) **EUROPEAN PATENT SPECIFICATION**

(45) Date of publication and mention
of the grant of the patent:
**13.05.2026 Bulletin 2026/20**

(21) Application number: **22780349.1**

(22) Date of filing: **23.03.2022**

(51) International Patent Classification (IPC):
**B22F 1/148** (2022.01)    **B22F 10/25** (2021.01)
**B22F 10/28** (2021.01)    **B22F 10/38** (2021.01)
**B33Y 10/00** (2015.01)    **B33Y 70/10** (2020.01)
**C22C 1/051** (2023.01)    **C22C 29/06** (2006.01)
**C22C 29/08** (2006.01)    B22F 9/02 (2006.01)

(52) Cooperative Patent Classification (CPC):
**B33Y 70/10; B22F 1/148; B22F 10/25; B22F 10/28;
B22F 10/38; B33Y 10/00; C22C 1/051;
C22C 29/067; C22C 29/08;** B22F 9/026;
C22C 2200/00; Y02P 10/25

(86) International application number:
**PCT/JP2022/013327**

(87) International publication number:
**WO 2022/210134 (06.10.2022 Gazette 2022/40)**

(54) **POWDER MATERIAL FOR ADDITIVE MANUFACTURING AND METHOD FOR MANUFACTURING AN ADDITIVE-MANUFACTURED PRODUCT**

PULVERMATERIAL FÜR DIE ADDITIVE FERTIGUNG UND VERFAHREN ZUR HERSTELLUNG EINES ADDITIV GEFERTIGTEN PRODUKTS

MATÉRIAU EN POUDRE POUR LA FABRICATION ADDITIVE ET PROCÉDÉ DE FABRICATION D'UN PRODUIT FABRIQUÉ DE MANIÈRE ADDITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2021 JP 2021059464**

(43) Date of publication of application:
**07.02.2024 Bulletin 2024/06**

(73) Proprietor: **Fujimi Incorporated
Kiyosu-shi, Aichi 452-8502 (JP)**

(72) Inventors:
• **YAMADA, Junya
Kiyosu-shi, Aichi 452-8502 (JP)**
• **IBE, Hiroyuki
Kiyosu-shi, Aichi 452-8502 (JP)**
• **KATO, Yuta
Kiyosu-shi, Aichi 452-8502 (JP)**

(74) Representative: **Maiwald GmbH
Elisenhof
Elisenstraße 3
80335 München (DE)**

(56) References cited:
WO-A1-2021/039912    CN-A- 111 663 067
JP-A- 2019 183 201    JP-A- 2020 020 014
JP-A- 2021 055 156    JP-A- 2021 055 160

• **DUMAN DILEK ET AL: "Synthesis, microstructure, and mechanical properties of WC-TiC-Co ceramic composites", JOURNAL OF THE EUROPEAN CERAMIC SOCIETY, vol. 32, no. 7, 1 June 2012 (2012-06-01), AMSTERDAM, NL, pages 1427 - 1433, XP093251573, ISSN: 0955-2219, DOI: 10.1016/ j.jeurceramsoc.2011.06.013**

**(Cont. next page)**

- **ZACKRISSON J. ET AL: "WC-Co based cemented carbides with large Cr3C2 additions", INTERNATIONAL JOURNAL OF REFRACTORY METALS AND HARD MATERIALS, vol. 16, no. 4-6, 1 January 1998 (1998-01-01), AMSTERDAM, NL, pages 417 - 422, XP093251584, ISSN: 0263-4368, DOI: 10.1016/S0263-4368(98)00048-1**

- **LUCA BOCCARUSSO ET AL: "Effects of Cr3C2 Addition on Wear Behaviour of WC-Co Based Cemented Carbides", METALS, vol. 8, no. 11, 1 November 2018 (2018-11-01), pages 895, XP055578958, DOI: 10.3390/met8110895**

## Description

### Technical Field

The present invention relates to a powder material suitable for additive manufacturing. The present invention also relates to a method for manufacturing an additive-manufactured product characterized by using the powder material and performing additive manufacturing. This application claims priority from Japanese Patent Application No. 2021-059464 filed on March 31, 2021.

### Background Art

The so-called three-dimensional manufacturing techniques by which a additive-manufactured product, which is the object to be manufactured, is produced based on three-dimensional shape data thereof (for example, three-dimensional CAD data) are widely used. One of such manufacturing techniques is an additive manufacturing method by which a powder material is laid in thin layers and then bonded or sintered into a shape corresponding to the cross section of the additive-manufactured product, which is to be manufactured, and these thin layers are sequentially and integrally stacked.

Conventionally, resin materials have been widely used as powder shaping materials used for such additive manufacturing, but in recent years, powder materials for additive manufacturing that are made of metals and ceramics that can be used for additive manufacturing by a powder bed fusion method (PBF), laser powder build-up method (LMD), etc. have been actively developed (see Patent Documents 1 to 4).

As examples, Patent Documents 5 and 6 as well as Non-Patent Documents 1 to 3 relate to WC-Co based cemented carbide powders.

Citation List

Patent Document

Patent Document 1: WO 2015/194678 A1
Patent Document 2: Japanese Patent Application Publication No. 2017-113952
Patent Document 3: Japanese Patent Application Publication No. 2017-114716
Patent Document 4: Japanese Patent Application Publication No. 2017-115194
Patent Document 5: Chinese Patent Application Publication No. 111 663 067
Patent Document 6: Japanese Patent Application Publication No. 2020-020014

Non-Patent Document

Non-Patent Document 1: Duman et al. "Synthesis, microstructure, and mechanical properties of WC-TiC-Co ceramic composites", J EUR CERAM SOC, 2012, Vol. 32, No. 7, 1427-1433
Non-Patent Document 2: Zackrisson et al. "WC-Co based cemented carbides with large Cr3C2 additions", INT J REFRACT MET HARD MATER, 1998, Vol. 16, No. 4-6, 417-422
Non-Patent Document 3: Boccarusso et al. "Effects of Cr3C2 Addition on Wear Behaviour of WC-Co Based Cemented Carbides", MET, 2018, Vol.8, No. 11, 895

### Summary of Invention

One of the development goals of powder materials for additive manufacturing that are made of inorganic materials such as metals and ceramics is the development of powder materials that can produce additive-manufactured products with high mechanical strength that are free from cracks and chips. As materials that meet this goal, powder materials including tungsten carbide (WC) and cobalt (Co) as main components have been actively developed. Tungsten carbide and cobalt are raw materials for cemented carbides (WC-Co alloys) and are suitable as materials for manufacturing additive-manufactured products with high hardness by additive manufacturing.

However, regarding powder materials that include tungsten carbide and cobalt as main components and that have been heretofore developed, there is still room for improvement in terms of further increasing the mechanical strength of additive-manufactured products.

In view of such circumstances, it is an object of the present invention to provide a powder material for additive manufacturing that includes, as main components, tungsten carbide and cobalt that can form an additive-manufactured product with more excellent mechanical strength (hereinafter can be also referred to as "WC/Co-containing powder material"). Another object of the present invention is to provide a method for manufacturing an additive-manufactured product, characterized by performing additive manufacturing using such a powder material.

In order to achieve the above objects, the present inventors have conducted detailed investigation of the alloy structure of additive-manufactured products made of powder materials including tungsten carbide and cobalt as main components. As a result, it was found that where a $\eta$ phase is present in the additive-manufactured product, the higher the presence ratio thereof, the lower the mechanical strength, and by intentionally increasing the content of carbon (C) contained in the WC/Co-containing powder material to be used for additive manufacturing, it is possible to suppress the formation of the $\eta$ phase, which is a brittle phase, and increase the mechanical strength of the additive-manufactured product. This finding led to the completion of the present invention as set out in the appended set of claims.

The powder material for additive manufacturing disclosed herein comprises tungsten carbide (WC), cobalt (Co), and a carbon additive including carbon (C) as a main constituent element.

In the WC/Co-containing powder material, where the value represented by the following formula:

$$[(\text{mass of C derived from WC}) + (\text{mass of C derived from carbon additive})]/(\text{mass of WC}) \times 100$$

is taken as a carbon content A (% by mass), the carbon content A (% by mass) satisfies the condition of $6.4 \leq A \leq 7.2$.

According to the technical knowledge obtained by the present inventors, when the powder additive manufacturing by the powder bed fusion method (PBF), laser powder build-up method (LMD), etc. was performed using the conventional WC/Co-containing powder materials, the amount of carbon component present was made lower than the theoretical value by irradiation energy of laser light or electron beam during the shaping, which could create a state in which the $\eta$ phase, which is a brittle phase, easily occurred in the structure of the additive-manufactured product. Furthermore, by adding a material (carbon additive) containing a predetermined amount of carbon to a WC/Co-containing powder material, the present inventors prevented the reduction of the amount of carbon component present when performing the additive manufacturing, and as a result, suppressed the formation of the $\eta$ phase, which is a brittle phase, in the structure of the additive-manufactured product and prevented the decrease in mechanical strength caused by the presence of the $\eta$ phase in the additive-manufactured product composed of the WC/Co-containing powder material.

Therefore, with the WC/Co-containing powder material for additive manufacturing disclosed herein, the decrease in the carbon component during additive manufacturing is prevented, the formation of the $\eta$ phase in the structure of the additive-manufactured product is suppressed, and the mechanical strength of the additive-manufactured product can be prevented from decreasing.

Therefore, according to the technique disclosed herein, it is possible to manufacture an additive-manufactured product that is composed of a cemented carbide containing WC-Co as a constituent component and that has excellent mechanical properties.

In a preferred embodiment of the powder material disclosed herein, the value of the carbon content A satisfies the condition of $6.6 \leq A \leq 6.9$.

With the powder material for additive manufacturing of such a configuration, it is possible to more preferably suppress the formation of the $\eta$ phase while maintaining better mechanical properties of the additive-manufactured product.

In the powder material disclosed herein, at least one solid carbon material selected from the group consisting of graphite, carbon black, activated carbon, carbon fiber and nanocarbon is included as the carbon additive.

With the powder material for additive manufacturing of such a configuration, since the carbon additive is composed of a material made of solid carbon, effective replenishment of the carbon component can be achieved.

Additionally, in another preferred embodiment of the powder material disclosed herein, a carbide of at least one metal selected from the group consisting of titanium (Ti), vanadium (V), chromium (Cr), niobium (Nb) and molybdenum (Mo) is included as the carbon additive.

With the powder material for additive manufacturing of such a configuration, since any one of the above metal carbides is included as the carbon additive, it is possible to manufacture an additive-manufactured product composed of an alloy material excellent in mechanical strength due to the presence of dissimilar metal elements other than WC and Co in addition to replenishing the carbon component.

In the powder material disclosed herein, the powder material is composed of granulated sintered particles in which the tungsten carbide, the cobalt, and the carbon additive are mixed.

With a powder material composed of granulated sintered particles in which the above three kinds of components are mixed, for example, granulated sintered particles (referred to as secondary particles; same hereinbelow) in which particles composed of tungsten carbide (referred to as primary particles; same hereinbelow) are mixed with granulated sintered particles obtained by mixing particles composed of cobalt and particles constituting the carbon additive, effective replenishment of the carbon component is realized, and the formation of the η phase can be more effectively suppressed.

The average particle size of the granulated sintered particles is 10 μm or more and 30 μm or less, and the particles (primary particles) constituting the granulated sintered particles are particles composed of tungsten carbide having an average particle size of less than 1 μm, particles of cobalt having an average particle size of 2 μm or more and 10 μm or less, and particles constituting the carbon additive having an average particle size of 1 μm or more and 5 μm or less.

The granulated sintered particles having the particle size defined in this way can more effectively suppress the formation of the η phase.

The strength of the granulated sintered particles is 5 kgf/mm$^2$ or more and 50 kgf/mm$^2$ or less.

In addition, the present teaching provides a method for manufacturing an additive-manufactured product, characterized by performing additive manufacturing using any of the powder materials disclosed herein. As described above, according to the technique disclosed herein, it is possible to manufacture an additive-manufactured product having excellent mechanical properties, which is composed of a cemented carbide containing WC-Co as a constituent component.

**Brief Description of Drawings**

[Fig. 1]

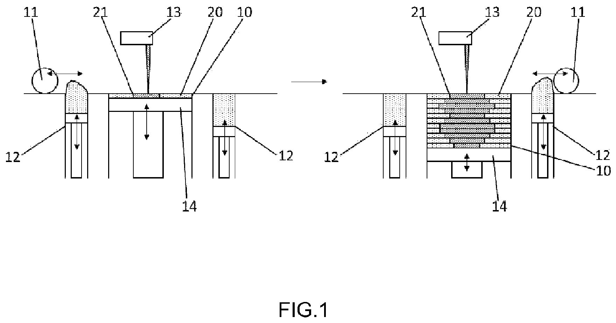

Fig. 1 is a simplified diagram of a powder additive manufacturing apparatus according to one embodiment.
[Fig. 2]

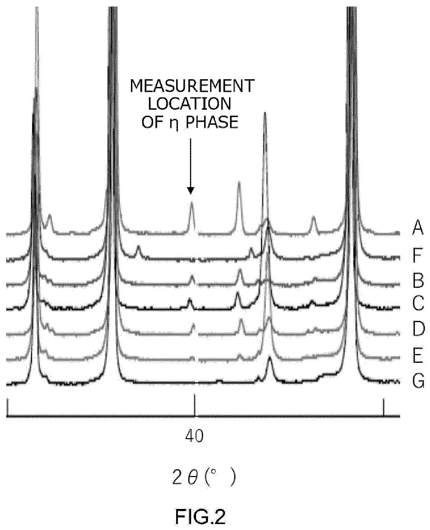

Fig. 2 is an XRD chart showing the relationship between the amount of carbon added and the degree of suppression of η phase formation in an additive-manufactured product.
[Fig. 3]

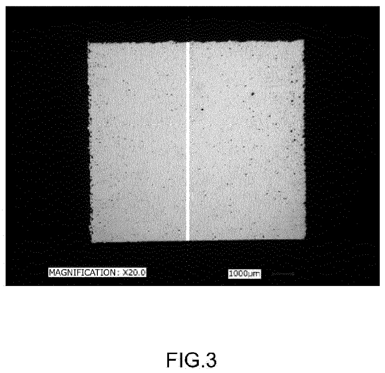

Fig. 3 is an optical micrograph showing a cross-section of a cube-additive-manufactured product (fired object) produced using a powder material according to an example.

**Description of Embodiments**

A preferred embodiment of the present invention will be described below. Matters other than those specifically mentioned in this specification, which are necessary for carrying out the present invention, can be ascertained as design matters by a person skilled in the art based on the related art in the relevant field. The present invention can be implemented based on the contents disclosed in this description and common technical knowledge in the relevant field. In the description, the notation "X to Y" indicating a numerical range means "X or more and Y or less" unless otherwise specified.

<Definitions>

In the present description, "powder material" refers to a powdery material used for additive manufacturing. The powder material disclosed herein is a WC/Co-containing powder material, that is, a powder material for additive manufacturing in which tungsten carbide and cobalt are the main constituent components (that is, a powder material for additive manufacturing in which the largest constituent components of the total powder material on a mass basis are WC + Co).

In the present description, the term "primary particles" means the smallest unit that can be identified as a granular material from its external appearance, among the morphological constituent components that constitute the powder material. Therefore, when the WC/Co-containing powder material disclosed herein includes secondary particles (for example, granulated particles), the particles that make up the secondary particles may be referred to as primary particles. Here, the term "secondary particles" refers to particulate matter (matter in the form of particles) in which primary particles are three-dimensionally bonded and integrated and act like one particle. Granulated particles and granulated sintered particles obtained by sintering after granulation are typical examples of the "secondary particles" used herein.

The term "bonding" as used herein refers to the direct or indirect bonding of two or more primary particles and is inclusive of, for example, bonding of primary particles based on chemical reaction, bonding in which primary particles are attracted to each other by simple adsorption, bonding using an anchor effect for which an adhesive or the like is introduced in the unevenness on the primary particle surface, bonding of primary particles using the effect of attraction due to static electricity, bonding in which the surfaces of the primary particles are melted and integrated, and the like.

Further, in the present description, the term "raw material particles" refers to particles that constitute the powder at the raw material stage that is used to form the powder material disclosed herein.

In the present description, the "average particle size" related to powder materials means an average particle size at 50% of the integrated value in the volume-based particle size distribution measured by a particle size distribution measuring device based on a laser scattering/diffraction method, unless otherwise specified (50% volume average particle diameter; $D_{50}$).

<Configuration of Powder Material>

As described above, the powder material disclosed herein is a WC/Co- containing powder material including tungsten carbide, cobalt, and a carbon additive including carbon as a main constituent element (that is, a material in which carbon is the largest constituent component on a mass basis).

A suitable form of such a powder material is one composed of granulated sintered particles in which WC particles, Co particles, and particles constituting the carbon additive as raw material particles are mixed.

For example, a WC powder of a high-carbon compounding species (HighC-WC powder) in which C is present in an amount exceeding the stoichiometric ratio of WC as a result of adding an excess amount of carbon component in advance to the WC particles (powder) as raw material particles may be used. In one form of the powder material disclosed herein, such a HighC-WC powder can be said to be a constituent component in which tungsten carbide and carbon additive are combined.

As a WC powder, which may be the HighC-WC powder, composed of raw material particles of tungsten carbide, various commercially available WC powder materials for forming cemented carbides can be used. Tungsten carbide raw material particles having an average particle size of less than 1 $\mu$m (for example, 0.05 $\mu$m to 0.5 $\mu$m, particularly 0.1 $\mu$m to 0.3 $\mu$m) are to be used. By employing a WC powder composed of such fine-sized tungsten carbide raw material particles, it is possible to manufacture an additive-manufactured product composed of a denser WC-Co-based alloy.

In addition, as the Co powder made of raw material particles of cobalt that is to be used for manufacturing the powder material disclosed herein, conventional Co powders that are suitable for the production of powder metallurgy and cemented carbide materials can be used without particular limitations. A Co powder having a particle size range of about 2 $\mu$m or more and about 10 $\mu$m or less (for example, 5 $\mu$m or less) is to be used.

The powder material disclosed herein is characterized in that a carbon additive including carbon (C) as a main constituent element is added in a specified amount determined based on the carbon content A (% by mass) described above. Suitable carbon additives include carbon materials that are solid at room temperature (particulate solid carbon materials) and are selected from the group consisting of graphite, carbon black (acetylene black, Ketjen black, etc.), activated carbon, carbon fibers (PAN-based carbon fibers, pitch-based carbon fibers, graphite fibers, etc.) and nanocarbons (carbon nanotubes, fullerenes, graphene, fine diamond particles, etc.). These kinds of solid carbon material can also be used as a carbon component supply source when producing the HighC-WC powder. As the carbon additive made of the solid carbon material described above, a particulate carbon additive having an average particle size range of 1 $\mu$m or more and 5 $\mu$m or less is to be used.

Additionally, other forms of suitable carbon additives include carbides of metallic elements that can form hard alloys with WC and Co. Such metal carbides are compounds that can function as a carbon supply source under energy irradiation with a laser beam, an electron beam, or the like at the time of additive manufacturing together with WC and Co. Such metal carbides include, but are not limited to, carbides of any of titanium (Ti), vanadium (V), chromium (Cr), niobium (Nb) and molybdenum (Mo).

As the carbon additive made of the metal carbide described above, a particulate carbon additive having an average particle size range of about 0.5 $\mu$m or more (for example, 1 $\mu$m or more) and about 10 $\mu$m or less (for example, 5 $\mu$m or less) can be used particularly preferably.

Alternatively, as will be described hereinbelow, optional components such as binders used for manufacturing the powder materials disclosed herein may also include those that function as carbon additives. For example, a carbon component that is an organic material suitable as a binder and that remains in the finally manufactured powder material is considered as the mass of C derived from the carbon additive (binder etc.) in determining the carbon content A.

The powder material disclosed herein is a powder material for additive manufacturing (WC/Co-containing powder material) that includes tungsten carbide and cobalt, and as long as a good WC-Co-based alloy can be formed, the contents of WC and Co in the entire powder material (based on mass) are only limited in that WC is 60% by mass or more and Co is 10% by mass or more. For example, WC is preferably 70% by mass or more, and particularly preferably 75% by mass or more, of the entire powder material.

Meanwhile, Co is preferably 15% by mass or more, and particularly preferably 15% by mass or more, of the entire powder material. From the viewpoint of preventing the WC content from becoming too low, the Co content is suitably 40% by mass or less, preferably 30% by mass or less, and particularly preferably 25% by mass or less. For example, a powder material containing 80% by mass to 85% by mass of WC and 15% by mass to 20% by mass of Co is a particularly preferred embodiment because a good WC-Co cemented carbide can be obtained.

Also, the amount of the carbon additive added to the powder material disclosed herein is defined so that the carbon content A (% by mass) represented by the following formula:

[(mass of C derived from WC) + (mass of C derived from carbon additive)]/(mass of WC) × 100 is within a predetermined range.

The carbon content A is preferably 6.4% by mass or more, particularly preferably 6.6% by mass or more. Also, A is preferably 7.2% by mass or less, and particularly preferably 6.9% by mass or less. Where the carbon content A is much lower than 6.4% by mass, there is a possibility that the shortage of C may not be compensated for, and the effect of suppressing the formation of the η phase is lowered, which is not preferable. Also, where the carbon content A is much higher than 7.2% by mass, there is a possibility that the amount of C present becomes excessive, which is disadvantageous for forming the WC-Co-based cemented carbide and is not preferable.

The powder material disclosed herein can contain other optional components as long as the carbon content A can be set within a predetermined range and a good WC-Co-based alloy can be formed. Examples of such optional components include a binder, a dispersing agent, a surfactant, an inorganic pigment, an organic pigment, and the like that do not function as carbon additives during additive manufacturing (materials that can function as carbon additives are included in the category of carbon additives in the present technique).

<Preparation of Powder Material>

A powder material not encompassed by the wording of the claims can be prepared, for example, by mixing raw material particles made of tungsten carbide (WC), raw material particles made of cobalt (Co), and raw material particles constituting a carbon additive containing carbon (C) as a main constituent element (when using HighC-WC powder, there may be no raw material particles independently constituting the carbon additive) together with other optional components.

However, the powder material disclosed herein is composed of granulated sintered particles in which the above components are mixed. Typically, it is a powder material composed of granulated sintered particles as secondary particles obtained by three-dimensional bonding, with gaps, of primary particles formed by mixing and granulating raw material particles (primary particles) of each component and then sintering. An example of a granulation and sintering method for suitably manufacturing such granulated and sintered particles will be described below, but this method is not limiting.

<Manufacture of Granulated Sintered Particles>

In the granulation and sintering method, raw material particles are granulated into a form of secondary particles and then sintered to bond (sinter) the raw material particles together. In such a granulation and sintering method, granulation can be performed using a granulation method such as dry granulation or wet granulation. Examples of granulation methods include tumbling granulation, fluidized bed granulation, frame agitation granulation, crushing granulation, melt granulation, spray granulation, microemulsion granulation, and the like. A particularly suitable granulation method is the spray granulation method.

According to the spray granulation method, powder materials can be manufactured, for example, by the following procedure. That is, first, raw material particles of respective kinds corresponding to tungsten carbide, cobalt and carbon additive are prepared, and the surfaces thereof are stabilized with a protective agent or the like as necessary. Then, the stabilized raw material particles are dispersed in an appropriate solvent together with spacer particles made of, for example, an organic material such as a binder as an optional component, to prepare a spray liquid. The dispersion of the raw material particles in the solvent can be carried out using, for example, a mixer such as a homogenizer, a blade stirrer, etc., a disperser, or the like. Droplets can be formed from the spray liquid using an ultrasonic atomizer or the like, and the droplets can be carried on an air stream and passed through a spray drying device (spray dryer) to form granulated particles.

By introducing the obtained granulated particles into a predetermined firing furnace and sintering the particles, it is possible to obtain a powder material consisting of granulated sintered particles in the form of secondary particles in which primary particles are bonded with gaps. Here, the primary particles may have substantially the same size and shape as the raw material particles or may be formed by growing and combining the raw material particles by firing.

When the droplets are dried in the manufacturing process described above, the raw material particles and the binder are in a uniformly mixed state, and the raw material particles are bonded by the binder to form mixed particles. When spacer particles are used, the raw material particles and the spacer particles are uniformly mixed and bonded together by a binder to form mixed particles. By firing the mixed particles, the binder (and spacer particles) is removed (burns out), and the raw material particles are sintered to form secondary particles in the form in which the primary particles are bonded with gaps being present therebetween.

During sintering, depending on the composition and size of the raw material particles, portions thereof may be in a liquid phase which may contribute to bonding with other particles. Therefore, the average particle size of the primary particles may be larger than that of the raw material particles of the starting material. The average particle size of secondary particles and primary particles, and the size and proportion of gaps formed between the primary particles can be designed according to the desired form of secondary particles.

In the manufacturing process described above, the concentration of raw material particles in the spray liquid to be adjusted is preferably 10% by mass to 40% by mass. Examples of binders to be added include carboxymethylcellulose (CMC) and polyvinylpyrrolidone (PVP). The binder to be added is preferably adjusted at a ratio of 0.05% by mass to 10% by mass (for example, 1% by mass to 5% by mass) with respect to the mass of the raw material particles. The firing environment is not particularly limited, and may be the air, vacuum, or an inert gas atmosphere, and sintering is preferably performed at a temperature of 600°C or higher and 1600°C or lower. In particular, when using spacer particles, a binder, etc., made of an organic material or the like, sintering may be performed in an atmosphere in which oxygen is present for the purpose of removing the organic material contained in the granulated particles. If necessary, the manufactured secondary particles may be pulverized and classified.

The strength of the granulated sintered particles constituting the powder material thus produced (hereinafter referred to as "granule strength") is preferably 9.81 MPa (1 kgf/mm$^2$) or more, more preferably 49.05 MPa (5 kgf/mm$^2$) or more, and particularly preferably 98.1 MPa (10 kgf/mm$^2$) or more (for example, 196.2 MPa (20 kgf/mm$^2$) or more). As a result, it is possible to suitably prevent the granulated sintered powder from collapsing or scattering due to energy for shaping. As a result, the supply of the powder material to the shaping area is stabilized, so that it is possible to form a uniform, high-quality object. Meanwhile, where the granule strength is excessively high, it will be difficult to sufficiently melt the powder material, which is not preferable. From this point of view, the granule strength is suitably less than 4,905 MPa (500 kgf/mm$^2$), preferably 2,943 MPa (300 kgf/mm$^2$) or less, more preferably 1,962 MPa (200 kgf/mm$^2$) or less, and particularly preferably 981 MPa (100 kgf/mm$^2$) or less (for example, 490.5 MPa (50 kgf/mm$^2$) or less

<Additive manufacturing Method>

The powder material (WC/Co-containing powder material) disclosed herein can be used in the same additive manufacturing method as in the case of manufacturing a conventional additive-manufactured product made of a WC-Co-based alloy.

Typical examples of such additive manufacturing method include the laser powder build-up method (also called the laser metal deposition method; LMD) and the powder bed fusion method (PBF). The powder bed fusion method (PBF) is inclusive of a selective laser melting method (SLM) that uses laser radiation as irradiation energy and an electron beam melting method (EBM) that uses an electron beam as irradiation energy.

The laser powder build-up method is a technique by which a powder material is provided to a desired part of a structure and irradiated therein with a laser beam to melt and solidify the powder material and build up the part (that is, manufacture an additive-manufactured product). By using this method, for example, when physical deterioration such as wear occurs in a structure, the deteriorated part can be built up by supplying a material constituting the structure or a reinforcing material or the like as a powder material to the deteriorated part and melting and solidifying the powder material.

In the powder bed fusion method, a three-dimensional structure can be shaped by layering performed by repeating an operation of scanning a laser beam or an electron beam on a powder layer obtained by deposition of a powder material and melting and solidifying the powder layer into a desired shape for each one cross section (one slice data) on the basis of slice data created from a design drawing.

An example of a method for manufacturing an additive-manufactured product by powder additive manufacturing using the powder material disclosed herein will be described with reference to Fig. 1.

Fig. 1 is a simplified diagram of an additive manufacturing device for powder additive manufacturing. As shown in this figure, as a general configuration, the additive manufacturing device includes a layering area 10 which is a space in which additive manufacturing is performed, a stock 12 where a powder material is stored, a wiper 11 that assists in supplying the powder material to the layering area 10, and a solidification means (energy radiation means such as a laser oscillator such as a carbon dioxide laser or a YAG laser, or a beam irradiation device) 13 for solidifying the powder material.

The layering area 10 typically has a shaping space surrounded by an outer periphery below a shaping surface and is provided with an elevating table 14 that can be raised and lowered in the shaping space. The elevating table 14 can be lowered by a predetermined thickness $\Delta t1$, and a desired additive-manufactured product is formed on the elevating table 14. The stock 12 is arranged beside the layering area 10, and has, for example, a bottom plate (elevating table) that can be raised and lowered by a cylinder or the like in a storage space surrounded by an outer periphery. By raising the bottom plate, a predetermined amount of powder material can be supplied (extruded) to the shaping surface.

In such an additive manufacturing device, a powder material layer 20 having a predetermined thickness $\Delta t1$ can be prepared by supplying the powder material layer 20 to the layering area 10 while the elevating table 14 is lowered from the shaping surface by the predetermined thickness $\Delta t1$. At this time, by scanning the shaping surface with the wiper 11, the powder material extruded from the stock 12 can be supplied onto the layering area 10, and the surface of the powder material can be flattened to form a homogeneous powder material layer 20. Then, for example, only the solidified region corresponding to the slice data of the first layer of the powder material layer 20 formed as the first layer is irradiated with energy such as a laser beam or an electron beam through the solidification means 13. By doing so, the powder material can be melted or sintered into a desired cross-sectional shape to form the first solidified powder layer 21.

Next, the elevating table 14 is lowered by a predetermined thickness $\Delta t1$, the powder material is supplied again, and the wiper 11 is used to smooth the powder material, thereby forming the second powder material layer 20. Only the solidification region corresponding to the slice data of the second layer of the powder material layer 20 is irradiated with energy through the solidification means 13 to solidify the powder material, thereby forming the solidified powder layer 21 of the second layer. At this time, the solidified powder layer 21 of the second layer and the solidified powder layer 21 of the first layer, which is the lower layer, are integrated to form a layered body up to the second layer. Subsequently, the elevating table 14 is lowered by a predetermined thickness $\Delta t1$ to form a new powder material layer 20 which is irradiated with energy through the solidification means 13 to form a solidified powder layer 21 only at required locations. In this way, by repeating the above steps, the additive manufacturing device can manufacture a target three-dimensional additive-manufactured product based on slice data created from a design drawing (3D CAD data) prepared in advance.

As described above, with the powder material disclosed herein, the formation of the $\eta$ phase ($Co_3W_3C$) is suppressed by the above-described additive manufacturing process, and a three-dimensional cemented carbide additive-manufactured product based on high-hardness WC-Co can be manufactured with little cracking and chipping.

Examples relating to the manufacture of the powder materials and additive-manufactured products disclosed herein will be described below, but the present technique is not intended to be limited to the features shown in the following examples.

<Test Example>

As raw material powders, tungsten carbide (WC) powder with an average particle size ($D_{50}$) of about 0.2 $\mu$m and cobalt (Co) powder with an average particle size ($D_{50}$) of about 5 $\mu$m were prepared. Then, compounding was performed so that the Co powder constituted 17% by mass of the entire powder material and a binder (CMC) constituted 1% by mass, with the balance being the WC powder, the compounded powder was dry mixed and then granulated with a spray drier. The obtained granulated particles were sintered to produce a powder material composed of granulated sintered particles (secondary particles). This powder material is referred to as Sample A according to this test example. As described above, Sample A does not contain any carbon additive.

Next, graphite particles ($D_{50}$: about 4 $\mu$m) or vanadium carbide (VC) particles ($D_{50}$: about 4 $\mu$m) or an appropriate combination thereof were compounded as carbon additives with the mixed powder, which had the same composition as Sample A, at a total of 6 different compounding ratios to prepare powder materials consisting of a total of 6 kinds of granulated sintered particles with mutually different carbon contents. These samples were named Sample A, Sample B, Sample C, Sample D, Sample E, Sample F, and Sample G (A < B < C < D < E < F < G) in descending order of carbon content.

Next, each of the powder materials of Samples A to G was tested, and simple cube-shaped additive-manufactured products were produced using a commercially available additive manufacturing device (product name: ProX DMP200, product of 3D Systems, Inc.).

In other words, the powder material that was laid flat was irradiated with a laser beam and melted layer by layer, and this process was repeated to produce a cube-additive-manufactured product. In this test example, the output was 300 W, the scanning speed was 300 mm/s, the pitch width was 0.1 mm, and the layering thickness per layer was 30 $\mu$m.

After the additive manufacturing, the resulting additive-manufactured product was subjected to firing treatment (heat treatment). That is, the firing treatment was performed for 2 h (continuously) at 1380°C in a reduced pressure atmosphere (10 Pa).

Next, an XRD (X-ray diffraction) measurement was performed on the fired object of the obtained additive-manufactured product. Then, the intensity of the peak (40.1°) indicating $Co_3W_3C$ ($\eta$ phase) from the XRD chart was compared between Samples A to G. The results are shown in Fig. 2.

As follows from the comparison of the heights of the peaks near 40.1° (that is, the peaks indicating the $\eta$ phase) of each sample shown, it was clearly recognized that the $\eta$ phase was formed in the structure of the additive-manufactured products produced from Samples A, B, C, and D which were powder materials with relatively low carbon contents. Meanwhile, no peak indicating the formation of the $\eta$ phase was recognized in the structures of the additive-manufactured products produced from Samples E, F, and G, which were powder materials having a relatively high carbon content.

These results show that the addition of a predetermined amount of carbon additive can suppress the formation of the $\eta$ phase, which is a brittle phase, in the structure of an additive-manufactured product made of a WC-Co-based alloy.

<Manufacturing Examples>

(Sample 1)

As raw material powders, tungsten carbide (WC) powder having an average particle size ($D_{50}$) of about 0.2 $\mu$m, cobalt (Co) powder having an average particle size ($D_{50}$) of about 5 $\mu$m, and graphite (C) powder having an average particle size ($D_{50}$) of about 4 $\mu$m were prepared. CMC was prepared as a binder.

Then, the powders were compounded so that 17% by mass of the entire powder material was Co powder, 1% by mass was CMC, 0.56% by mass was graphite powder, and the balance was WC powder, and the obtained compounded powder was wet mixed and then granulated with a spray dryer. The obtained granulated particles were sintered to manufacture a powder material composed of granulated sintered particles (secondary particles). This powder material is referred to as Sample 1 according to this manufacturing example.

(Samples 2 to 6 and Reference Sample 7)

A powder material of Sample 2 was manufactured by the same process as Sample 1, except that vanadium carbide (VC) powder having an average particle size ($D_{50}$) of about 4 $\mu$m was further prepared as a raw material powder, and compounding was performed such that 17% by mass of the entire powder material was Co powder, 1% by mass was CMC, 1% by mass was VC, 0.28% by mass was graphite powder, and the balance was WC powder.

Further, a powder material of Sample 3 was manufactured by the same process as Sample 1, except that compounding was performed such that 17% by mass of the entire powder material was Co powder, 1% by mass was CMC, 0.84% by mass was graphite powder, and the balance was WC powder.

Further, a powder material of Sample 4 was manufactured by the same process as Sample 1, except that compounding was performed such that 17% by mass of the entire powder material was Co powder, 1% by mass was CMC, 3% by mass was VC, 0.14% by mass was graphite powder, and the balance was WC powder.

Further, a powder material of Sample 5 was manufactured by the same process as Sample 1, except that compounding was performed such that 17% by mass of the entire powder material was Co powder, 1% by mass was CMC, 0.28% by mass was graphite powder, and the balance was WC powder.

Further, a powder material of Sample 6 was manufactured by the same process as Sample 1, except that compounding was performed such that 17% by mass of the entire powder material was Co powder, 1% by mass was CMC, 0.14% by mass was graphite powder, and the balance was WC powder.

Further, a powder material of Reference Sample 7 was manufactured by the same process as Sample 1, except that compounding was performed such that 17% by mass of the entire powder material was Co powder, 1% by mass was CMC, and the balance was WC powder. That is, the powder material of Reference Sample 7 did not contain a substance corresponding to a carbon additive.

For the powder materials (granulated sintered particles) of Samples 1 to 6 and Reference Sample 7 produced, the volume-based particle size distribution was measured using a commercially available particle size distribution measuring device based on the laser diffraction/scattering method. The values of $D_3$, $D_{10}$, $D_{50}$, $D_{90}$ and $D_{97}$ are shown in the corresponding columns of Table 1.

The average particle size ($D_{50}$) for all samples was in the range of 15 $\mu$m to 20 $\mu$m, and most of the particles were found to be in the range of 8 $\mu$m to 40 $\mu$m.

For the powder materials (granulated sintered particles) of Samples 1 to 6 and Reference Sample 7, W, Co, V, and unavoidable impurity components (here, Fe and Zr) were quantitatively analyzed using a commercially available wavelength dispersive X-ray fluorescence spectrometer (XRF-1800: product of Shimadzu Corporation) based on X-ray fluorescence spectrometry.

In addition, the overall C content (total C content) was measured using a commercially available carbon/sulfur analyzer (EMIA: product of Horiba, Ltd.). Then, the amount of C derived from WC was stoichiometrically calculated from the quantitative value of W, and the amount of C obtained by subtracting the amount of C derived from WC from the total amount of C was taken as the amount of C derived from the carbon additive.

The content (% by mass) of each element thus obtained is shown in the corresponding column of Table 1. In addition, the carbon content A (% by mass) of each sample is represented in the corresponding column of Table 1 based on the above-described calculation formula.

In addition, for the powder materials (granulated sintered particles) of Samples 1 to 6 and Reference Sample 7, the granule strength was measured using an electromagnetic force loading type compression tester. Specifically, 10 or more granulated sintered particles constituting the powder material of each sample were randomly sampled, and the arithmetic mean value of the fracture strength measured using a commercially available microcompression tester (MCT-500: product of Shimadzu Corporation) was defined as the granule strength MPa (kgf/mm$^2$). The fracture strength $\sigma$ [MPa] of the granulated sintered particles can be calculated from the formula: $\sigma = 2.8 \times L/\pi/d2$ where L [N] is the critical load obtained in the compression test and d [mm] is the average particle size. The granule strength MPa (kgf/mm$^2$) of each sample is shown in the corresponding column of Table 1.

Next, each of the powder materials of Samples 1 to 6 and Reference Sample 7 was tested, and simple cube-shaped additive-manufactured products were produced using a commercially available additive manufacturing device (product name: ProX DMP200, product of 3D Systems, Inc.). That is, in the same manner as in the test example, the powder material that was laid flat was irradiated with a laser beam and melted layer by layer, and this process was repeated to produce a cube-additive-manufactured product. In this test example, the output was 300 W, the scanning speed was 300 mm/s, the pitch width was 0.1 mm, and the layering thickness per layer was 30 $\mu$m.

After the additive manufacturing, the resulting additive-manufactured product was subjected to firing treatment (heat treatment). That is, the firing treatment was performed for 2 h (continuously) at 1380°C in a reduced pressure atmosphere (10 Pa).

Next, an XRD (X-ray diffraction) measurement was performed on the fired objects of the obtained additive-manufactured products. Here, in the XRD measurement, the intensity of the peak (40.1°) indicating $Co_3W_3C$ ($\eta$ phase) and the intensity of the peak (35.6°) indicating WC were detected, and the presence or absence of $\eta$ phase formation and the degree of formation in the additive-manufactured product (fired object) of each sample were evaluated from the ratio of these peaks ($Co_3W_3C$ /WC). The results are shown in the corresponding columns of Table 1.

In the "Presence of $\eta$ phase" column of Table 1, for the products with the XRD measurement peak ratio (%) of 0%, the entry is "Absent" because the presence of the $\eta$ phase is not recognized, and for the product for which the XRD measurement peak ratio (%) is not 0, but less than 1%, the entry is "Nearly absent" because although the presence of the $\eta$ phase is recognized, the presence ratio is extremely small.

Meanwhile, for the products where the XRD measurement peak ratio (%) was 1% or more and less than 3%, the entry is "Some is present" because although some presence of the $\eta$ phase is observed, the presence ratio is such that this phase does not substantially affect the mechanical strength.

For the products with the XRD measurement peak ratio (%) of 3% or more, the entry is "Present" because the presence of the $\eta$ phase is recognized, and the presence ratio is such that this phase could substantially affect the mechanical strength compared to the products without the $\eta$ phase.

The cube-additive-manufactured product (fired object) of Sample 1 was cut in a direction perpendicular to the layering direction, and each cross section was observed with an optical microscope. Fig. 3 is a micrograph showing a cut surface of the additive-manufactured product (fired product) of sample 1. In Table 1, the granule strength in MPa can be obtained by multiplying the corresponding values in kgf/mm$^2$ by 9.8.

[Table 1]

Table 1

| | | Sample 1 | Sample 2 | Sample 3 | Sample 4 | Sample 5 | Sample 6 | Reference Sample 7 |
|---|---|---|---|---|---|---|---|---|
| | Composition of powder material | WC/17%Co/0.56%C | WC/17%Co/1%VC/0.28%C | WC/17%Co/0.84%C | WC/17%Co/3%VC/0.14%C | WC/17%Co/0.28%C | WC/17%Co/0.14%C | WC/17%Co |
| Average particle size of raw material powder | WC particles (Dv50%μm) | 0.2 | 0.2 | 0.2 | 0.2 | 0.2 | 0.2 | 0.2 |
| | Co particles (Dv50%μm) | 5 | 5 | 5 | 5 | 5 | 5 | 5 |
| | Graphite particles (Dv50%μm) | 4 | 4 | 4 | 4 | 4 | 4 | - |
| | VC particles (Dv50%μm) | - | 4 | - | 4 | - | - | - |
| Powder | Granulated sintered powder (μm) | | | | | | | |
| | Particle size — Dv97% | 33.5 | 36.5 | 34.1 | 33.2 | 30.2 | 35.7 | 31.1 |
| | Particle size — Dv90% | 27.1 | 27.1 | 27.2 | 26.4 | 24.6 | 28.1 | 24.6 |
| | Particle size — Dv50% | 17.7 | 16.4 | 17.9 | 17.2 | 16.1 | 18.0 | 16.0 |
| | Particle size — Dv10% | 11.4 | 10.4 | 11.7 | 11.1 | 10.4 | 11.7 | 10.6 |
| | Particle size — Dv3% | 9.1 | 8.2 | 9.2 | 8.8 | 8.3 | 9.3 | 8.7 |
| | Granule strength (kgf/mm$^2$) | 42.8 | 40.4 | 40.3 | 41.2 | 35.6 | 39.4 | 51.5 |
| | Chemical composition (% by mass) — W | 77.0 | 75.9 | 76.8 | 74.5 | 77.4 | 77.1 | 77.0 |
| | Total C | 5.6 | 5.4 | 5.9 | 5.6 | 5.4 | 5.2 | 5.1 |
| | C derived from WC | 5.0 | 5.0 | 5.0 | 4.9 | 5.1 | 5.0 | 5.0 |
| | C derived from carbon additive | 0.6 | 0.5 | 0.9 | 0.7 | 0.4 | 0.2 | 0.0 |
| | Co | 17.3 | 17.8 | 17.2 | 17.7 | 17.1 | 17.5 | 17.7 |
| | V | 0.0 | 0.7 | 0.0 | 2.2 | 0.0 | 0.0 | 0.0 |
| | Fe | 0.0 | 0.1 | 0.0 | 0.0 | 0.0 | 0.0 | 0.1 |
| | Zr | 0.1 | 0.1 | 0.1 | 0.1 | 0.1 | 0.1 | 0.1 |
| | Carbon content A (% by mass) | 6.9 | 6.7 | 7.2 | 7.0 | 6.6 | 6.4 | 6.2 |
| Additive-manufactured product (fired object) | XRD measurement peak ratio Co$_3$W$_3$C/WC*100 (%) 40.1 degrees/35.6 degrees | 0.0% | 0.0% | 0.0% | 0.0% | 0.3% | 1.7% | 5.0% |
| | Presence of η phase | Absent | Absent | Absent | Absent | Nearly absent | Some is present | Present |

As is clear from Table 1 and Fig. 3 showing the results of this manufacturing example, in the additive-manufactured products (fired objects) manufactured by additive manufacturing by using the powder materials of Samples 1 to 6 obtained by adding the carbon additive to the WC/Co-containing powder material so that the amount of C exceeded the stoichiometric composition ratio of WC, specifically, the powder materials of Samples 1 to 6 obtained by adding the carbon additive (here, graphite, VC, and CMC) so that the carbon content A (mass%) satisfied the condition of $6.4 \leq A \leq 7.2$, the η phase was not formed at all in the WC-Co-based alloy structure, or even when it was formed, the level thereof was very small. As a result, as shown in Fig. 3, it was possible to manufacture additive-manufactured products composed of a WC-Co-based alloy structure with a dense structure in which no cracks or chips are observed.

In the additive-manufactured product manufactured from the powder material of Reference Sample 7, in which the carbon content A was approximately the stoichiometric composition ratio of WC, a relatively large amount of the η phase was formed in the structure, and the improvement of mechanical strength was not recognized at all.

Although detailed data are not shown, the mechanical properties (hardness etc.), in particular, of the additive-manufactured products (fired objects) manufactured from the powder materials of Samples 1, 2 and 5, in which a carbon additive such as graphite was added so that the carbon content A (mass%) satisfied the condition of $6.6 \leq A \leq 6.9$, were superior to those of the additive-manufactured products (fired objects) manufactured from the powder materials of other samples. This indicates that a more suitable amount of carbon additive (in other words, a more suitable amount of C added) makes it possible to suppress effectively the formation of the η phase in the WC-Co alloy structure without including an excessive amount of C in the alloy structure.

Reference Signs List

| | |
|---|---|
| 10 | Shaping area |
| 11 | Wiper |
| 12 | Stock |
| 13 | Solidification means |
| 14 | Elevating table |
| 20 | Powder material layer |
| 21 | Powder solidified layer |

**Claims**

**1.** A powder material for additive manufacturing, comprising

tungsten carbide (WC) in a content of 60% by mass or more of the entire powder material,
cobalt (Co) in a content of 10% by mass or more of the entire powder material, and
a carbon additive including carbon (C) as a main constituent element, wherein at least one solid carbon material selected from the group consisting of graphite, carbon black, activated carbon, carbon fiber and nanocarbon is included as the carbon additive,
wherein
the powder material is composed of granulated sintered particles in which the tungsten carbide, the cobalt, and the carbon additive are mixed, wherein

the granulated sintered particles have an average particle size of 10 μm or more and 30 μm or less,

particles consisting of the tungsten carbide and having an average particle size of less than 1 μm,
particles consisting of the cobalt and having an average particle size of 2 μm or more and 10 μm or less, and

particles constituting the carbon additive and having an average particle size of 1 μm or more and 5 μm or less,
are included herein as particles constituting the granulated sintered particles, wherein the respective average particle size at 50% of the integrated value in the volume-based particle size distribution is measured as described in the description, and
the strength of the granulated sintered particles is 5 kgf/mm$^2$ or more and 50 kgf/mm$^2$ or less, as measured by a method described in the description, and

the value of a carbon content A (% by mass), which is represented by the following formula: [(mass of C derived from WC) + (mass of C derived from carbon additive)]/(mass of WC) $\times$ 100, satisfies the condition of $6.4 \leq A \leq 7.2$.

2. The powder material according to claim 1, wherein the value of the carbon content A (% by mass) satisfies the condition of $6.6 \leq A \leq 6.9$.

3. The powder material according to claim 1 or 2, comprising a carbide of at least one metal selected from the group consisting of titanium (Ti), vanadium (V), chromium (Cr), niobium (Nb) and molybdenum (Mo) as the carbon additive.

4. A method for manufacturing an additive-manufactured product, wherein additive manufacturing is performed using the powder material according to any one of claims 1 to 3, and wherein the ratio of the intensity of the peak (40.1°) indicating $Co_3W_3C$ ($\eta$ phase) and the intensity of the peak (35.6°) indicating WC is either 0%, less than 1%, or 1% or more and less than 3% measured by X-ray diffraction method on the obtained additive-manufactured product.

**Patentansprüche**

1. Pulvermaterial für die additive Fertigung, umfassend

Wolframkarbid (WC) in einem Gehalt von 60 Masse-% oder mehr des gesamten Pulvermaterials,
Kobalt (Co) in einem Gehalt von 10 Masse-% oder mehr des gesamten Pulvermaterials, und
ein Kohlenstoffadditiv, das Kohlenstoff (C) als Hauptbestandteil beinhaltet, wobei mindestens ein festes Kohlenstoffmaterial ausgewählt aus der Gruppe bestehend aus Graphit, Ruß, Aktivkohle, Kohlenstofffasern und Nanokohlenstoff als Kohlenstoffadditiv beinhaltet ist,
wobei
das Pulvermaterial aus granulierten Sinterpartikeln besteht, in denen das Wolframkarbid, das Kobalt und das Kohlenstoffadditiv gemischt sind, wobei

die granulierten Sinterpartikel eine durchschnittliche Partikelgröße von 10 $\mu$m oder mehr und 30 $\mu$m oder weniger aufweisen,

Partikel, die aus dem Wolframkarbid bestehen und eine durchschnittliche Partikelgröße von weniger als 1 $\mu$m aufweisen,
Partikel, die aus dem Kobalt bestehen und eine durchschnittliche Partikelgröße von 2 $\mu$m oder mehr und 10 $\mu$m oder weniger aufweisen, sowie
Partikel, die das Kohlenstoffadditiv bilden und eine durchschnittliche Partikelgröße von 1 $\mu$m oder mehr und 5 $\mu$m oder weniger aufweisen,
hierin als die granulierten Sinterpartikel bildenden Partikel beinhaltet sind, wobei die jeweilige durchschnittliche Partikelgröße bei 50 % des integrierten Wertes in der volumenbasierten Partikelgrößenverteilung gemessen wird wie in der Beschreibung beschrieben, und
die Festigkeit der granulierten Sinterpartikel 5 kgf/mm$^2$ oder mehr und 50 kgf/mm$^2$ oder weniger beträgt, gemessen nach einem in der Beschreibung beschriebenen Verfahren, und

der Wert eines Kohlenstoffgehalts A (Masse-%), der durch die folgende Formel dargestellt wird: [(Masse von C, abgeleitet aus WC) + (Masse von C, abgeleitet aus Kohlenstoffadditiv)]/(Masse von WC) $\times$ 100, die Bedingung $6,4 \leq A \leq 7,2$ erfüllt.

2. Pulvermaterial nach Anspruch 1, wobei der Wert des Kohlenstoffgehalts A (Masse-%) die Bedingung $6,6 \leq A \leq 6,9$ erfüllt.

3. Pulvermaterial nach Anspruch 1 oder 2, umfassend ein Karbid mindestens eines Metalls ausgewählt aus der Gruppe bestehend aus Titan (Ti), Vanadium (V), Chrom (Cr), Niob (Nb) und Molybdän (Mo) als das Kohlenstoffadditiv.

4. Verfahren zur Herstellung eines additiv gefertigten Produkts, wobei die additive Fertigung unter Verwendung des Pulvermaterials gemäß einem der Ansprüche 1 bis 3 durchgeführt wird, und wobei das Verhältnis der Intensität des $Co_3W_3C$ ($\eta$-Phase) anzeigenden Peaks (40,1°) und der Intensität des WC anzeigenden Peaks (35,6°) entweder 0 %, weniger als 1 % oder 1 % oder mehr und weniger als 3 % beträgt, gemessen mittels Röntgenbeugungsverfahren am erhaltenen additiv gefertigten Produkt.

**Revendications**

1. Un matériau en poudre pour fabrication additive, comprenant

   du carbure de tungstène (WC) dans une teneur de 60 % en masse ou plus de l'ensemble du matériau en poudre, du cobalt (Co) dans une teneur de 10 % en masse ou plus de l'ensemble du matériau en poudre, et un additif de carbone comprenant du carbone (C) en tant qu'élément constitutif principal, lequel comprend au moins un matériau de carbone solide choisi dans le groupe constitué de graphite, noir de carbone, charbon actif, fibre de carbone et nanocarbone en tant qu'additif de carbone,
   lequel
   le matériau en poudre est composé de particules frittées granulées dans lesquelles le carbure de tungstène, le cobalt et l'additif de carbone sont mélangés, lequel

   les particules frittées granulées ont une taille moyenne des particules de 10 $\mu$m ou plus et 30 $\mu$m ou moins,

   des particules constituées du carbure de tungstène et ayant une taille moyenne des particules de moins de 1 $\mu$m,
   des particules constituées du cobalt et ayant une taille moyenne des particules de 2 $\mu$m ou plus et 10 $\mu$m ou moins, et
   des particules constituant l'additif de carbone et ayant une taille moyenne des particules de 1 $\mu$m ou plus et 5 $\mu$m ou moins,
   sont incluses ici en tant que particules constituant les particules frittées granulées, lequel la taille moyenne respective des particules à 50 % de la valeur intégrée dans la distribution granulométrique en fonction du volume est mesurée comme décrit dans la description, et
   la résistance des particules frittées granulées est de 5 kgf/mm$^2$ ou plus et 50 kgf/mm$^2$ ou moins, telle que mesurée par un procédé décrit dans la description, et

   la valeur d'une teneur en carbone A (% en masse), qui est représentée par la formule suivante : [(masse de C dérivée du WC) + (masse de C dérivée de l'additif de carbone)]/(masse de WC) $\times$ 100, satisfait la condition de $6,4 \le A \le 7,2$.

2. Le matériau en poudre selon la revendication 1, lequel la valeur de la teneur en carbone A (% en masse) satisfait la condition de $6,6 \le A \le 6,9$.

3. Le matériau en poudre selon l'une quelconque des revendications 1 ou 2, comprenant un carbure d'au moins un métal choisi dans le groupe constitué de titane (Ti), vanadium (V), chrome (Cr), niobium (Nb) et molybdène (Mo) en tant qu'additif de carbone.

4. Un procédé de fabrication d'un produit fabriqué par fabrication additive, lequel la fabrication additive est réalisée en utilisant le matériau en poudre selon l'une quelconque des revendications 1 à 3, et lequel le rapport de l'intensité du pic (40,1°) indiquant Co$_3$W$_3$C (phase $\eta$) et de l'intensité du pic (35,6°) indiquant WC est soit 0 %, inférieur à 1 %, ou 1 % ou plus et inférieur à 3 %, mesuré par méthode de diffraction des rayons X sur le produit fabriqué par fabrication additive obtenu.

FIG.1

MEASUREMENT
LOCATION
OF η PHASE

A
F
B
C
D
E
G

40

$2\theta\,(°)$

FIG.2

MAGNIFICATION : X20.0　　1000μm

FIG.3

**EP 4 317 502 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021059464 A
- WO 2015194678 A1
- JP 2017113952 A
- JP 2017114716 A
- JP 2017115194 A
- CN 111663067
- JP 2020020014 A

### Non-patent literature cited in the description

- **DUMAN et al.** Synthesis, microstructure, and mechanical properties of WC-TiC-Co ceramic composites. *J EUR CERAM SOC*, 2012, vol. 32 (7), 1427-1433
- **ZACKRISSON et al.** WC-Co based cemented carbides with large Cr3C2 additions. *INT J REFRACT MET HARD MATER*, 1998, vol. 16 (4-6), 417-422
- **BOCCARUSSO et al.** Effects of Cr3C2 Addition on Wear Behaviour of WC-Co Based Cemented Carbides. *MET*, 2018, vol. 8 (11), 895